# FASCICULE DE BREVET EUROPEEN

(11) **EP 3 386 715 B1**
(45) Date de publication et mention de la délivrance du brevet: **23.10.2019**
(21) Numéro de dépôt: 16819991.7
(22) Date de dépôt: 08.12.2016
(51) Int. Cl.: B29C 49/56, B29C 49/06, B29C 49/36, B29L 31/00

(54) **UNITE DE MOULAGE DONT L'OUVERTURE EST COMMANDEE PAR UN ARBRE MUNI D'UN AMORTISSEUR DE TORSION**
FORMEINHEIT, DEREN ÖFFNUNG VON EINER WELLE MIT EINEM TORSIONSDÄMPFER KONTROLLIERT WIRD
MOULDING UNIT OF WHICH THE OPENING IS CONTROLLED BY A SHAFT PROVIDED WITH A TORSIONAL DAMPER

(30) Priorité: 10.12.2015 FR 1562128
(43) Date de publication de la demande: 17.10.2018
(73) Titulaire: Sidel Participations, 76930 Octeville-sur-Mer (FR)
(72) Inventeur: BRACHET, Vincent, 76930 Octeville-sur-mer (FR)
(74) Mandataire: Grassin d'Alphonse, Emmanuel Jean Marie
(86) Numéro de dépôt international: PCT/FR2016/053271
(87) Numéro de publication internationale: WO 2017/098161

(56) Documents cités:
- EP-A1- 2 435 235
- DE-T2- 60 219 464
- FR-A1- 3 000 155
- US-A1- 2005 238 753
- US-A1- 2011 117 237

## Description

### DOMAINE TECHNIQUE DE L'INVENTION

L'invention concerne une unité de moulage équipée d'un arbre de commande de l'ouverture de supports de moule dont le pivotement est commandé par une came.

L'invention concerne plus particulièrement une unité de moulage, notamment pour le formage de récipient en matériau thermoplastique, qui est montée mobile le long d'un trajet de production et qui comporte au moins deux supports de moule destinés à être commandés entre une position ouverte et une position fermée, l'unité de moulage étant équipé d'un ensemble à arbre de commande des supports de moule vers au moins l'une de leurs positions, l'ensemble étant monté pivotant autour d'un axe d'arbre et comportant :
- un tronçon de sortie de couple qui est lié mécaniquement à au moins un support de moule pour transmettre le mouvement de pivotement ;
- un tronçon d'entrée de couple qui comporte un suiveur de came, le suiveur de came étant destiné à coopérer avec un chemin de came.

### ARRIERE PLAN TECHNIQUE DE L'INVENTION

L'invention se rapporte à une unité de moulage pour une installation de fabrication en grandes séries de récipients, notamment de bouteilles, en matériau thermoplastique, tel que du polyéthylène téréphtalate (PET). Les récipients sont obtenus par formage d'ébauches, généralement appelées préformes, qui sont préchauffées à une température adaptée avant d'être insérées dans des moules. Le formage est par exemple réalisé par soufflage ou par étirage-soufflage.

Une telle installation est généralement équipée d'une station de formage comportant plusieurs unités de moulage qui sont mobiles en continu. La station de formage consiste par exemple en un carrousel qui est muni à sa périphérie d'une pluralité d'unités de moulage réparties régulièrement. Chaque unité de moulage est ainsi mobile le long d'un trajet fermé, ici circulaire. Une station de formage mobile en continu permet d'obtenir une cadence de production élevée de récipients.

Chaque unité de moulage comporte un moule réalisé en au moins deux parties principales, plus généralement en trois parties principales : soit deux parties principales forment la totalité du récipient (à l'exception de leur goulot), soit, lorsque les récipients ont des fonds de forme complexe (ce qui est le cas dans la quasi-totalité des cas désormais), deux parties principales servent à former le corps des récipients et une troisième partie principale, constituée par un fond de moule, mobile dans le sens axial - ou longitudinal - du moule forme le fond des récipients. "Principale" signifie que l'une ou l'autre des parties en question peut être elle-même constituée de plusieurs éléments.

L'invention concerne plus particulièrement l'agencement autour des deux parties qui forment soit la totalité des récipients, soit celles qui forment le corps seulement.

Chacune de ces deux parties de moule est portée par un support de moule associé, parfois appelé porte-moule. Les deux supports de moule d'une unité de moulage sont montés mobiles l'un par rapport à l'autre entre une position fermée dans laquelle les deux parties de moule sont jointes pour permettre l'opération de formage, et une position ouverte dans laquelle les deux parties de moule sont écartées pour permettre la sortie d'un récipient formé et l'insertion d'une préformes chaude.

Les supports de moule sont écartés transversalement, soit par pivotement de l'un par rapport à l'autre autour d'un axe de charnière vertical, soit par coulissement transversal.

Il est nécessaire de synchroniser l'ouverture des supports de moule avec leur passage à partir d'une position angulaire de déchargement d'un récipient fini jusqu'à une position angulaire de chargement d'une préforme préchauffée, puis de fermer chaque support aussi vite que possible sur la suite du trajet. A cet effet, la commande de l'ouverture des supports de moule par l'intermédiaire d'un dispositif de commande à came est traditionnellement employée.

Un tel dispositif de commande comporte une came fixe qui est agencée le long du parcours de l'unité de moulage depuis la position angulaire de déchargement d'un récipient fini jusqu'à sa position angulaire de chargement d'une préforme préchauffée. Les supports de moule sont ensuite rappelés élastiquement vers leur position de fermeture sur le reste du trajet.

La came est généralement agencée au-dessous ou au-dessus des supports de moule. Un arbre vertical de commande est commandé en pivotement par la came par l'intermédiaire d'une manivelle dont une extrémité comporte un suiveur de came, tel qu'un galet. L'extrémité de l'arbre opposée à la manivelle est reliée mécaniquement aux supports de moule par l'intermédiaire de bielles qui transforment le pivotement de l'arbre en mouvement d'ouverture des supports de moule. L'arbre forme un unique élément relié rigidement à la manivelle d'une part, et aux moyens de liaison mécanique d'autre part.

Il est impératif que les supports de moule soient parfaitement fermés durant l'opération de formage. A cette fin, la came est interrompue sur la partie du trajet dédiée à cette opération. Le suiveur de came ne risque ainsi pas de commander accidentellement les supports de moule en position ouverte, par exemple à cause de vibrations ou des tolérances d'usinages de la came. De ce fait, lorsque l'unité de moulage parvient à sa position de déchargement, le suiveur de came, qui était décollé de la came, accoste la came.

On a constaté que l'accostage du suiveur de came sur la came produisait un choc important. L'énergie dégagée par ce choc est très importante du fait de la vitesse de rotation élevée du carrousel. Les unités de moulage sont en effet susceptibles de se déplacer à plus de 6 m/s. Le choc est d'autant plus important que les supports de moule sont des éléments très lourds, par exemple de l'ordre de quelques dizaines de kilogrammes, qui sont excentrés par rapport à leur axe de charnière. Les supports de moule présentent donc une forte inertie qui s'oppose au pivotement de l'arbre de commande.

Pour toutes ces raisons, le galet suiveur de came est une pièce qui s'use rapidement et doit être fréquemment remplacée.

En outre, malgré le choix d'un matériau très rigide pour réaliser l'arbre de commande, ce dernier présente néanmoins une certaine élasticité en torsion. Le choc d'accostage du suiveur de came excite l'arbre de commande en torsion. L'arbre se met en conséquence à vibrer en torsion autour de son axe, provoquant des tressautements du galet suiveur de came par rapport à la came. Ceci participe à l'usure prématurée du galet.

De plus, ces vibrations incontrôlées sont susceptibles de provoquer des retards aléatoires d'ouverture et/ou de fermeture des supports de moule. Or, dans un contexte où l'on cherche à augmenter les cadences de production, un retard, même léger, peut avoir des conséquences désastreuses. Un tel retard est en effet susceptible d'abîmer des récipients, voire de bloquer la machine, obligeant ainsi à interrompre la production pour remédier au problème.

Par ailleurs, ces vibrations en torsion de l'arbre sont aussi susceptibles de provoquer une dégradation des liaisons mécaniques des bielles avec l'arbre de commande et avec les supports de moule.

Pour atténuer ces problèmes, on a déjà proposé de réaliser une rampe progressive sur la came de manière à adoucir l'accostage. Néanmoins, une telle rampe n'élimine pas totalement le choc d'accostage.

En outre, la rampe ne peut pas présenter une longueur importante sans que cela n'augmente de manière conséquente la longueur du trajet des unités de moulage. Cela risquerait de freiner la cadence de production en allongeant la partie de trajet comprise entre la position de chargement et la position de déchargement.

Par ailleurs, les documents US2011/0117237 et DE60219464 décrivent chacun un mécanisme d'ouverture de portes-moule. Le document FR3000155 décrit un amortisseur de torsion pour un dispositif de transmission de couple d'un véhicule automobile.

### BREF RESUME DE L'INVENTION

L'invention concerne une unité de moulage tel que décrite précédemment, caractérisée en ce que le tronçon de sortie de couple et le tronçon d'entrée de couple forment deux éléments distincts de l'ensemble à arbre de commande pivotant coaxialement l'un par rapport à l'autre, ledit tronçon d'entrée de couple étant accouplé avec le tronçon de sortie de couple par l'intermédiaire d'au moins un amortisseur de torsion.

Selon d'autres caractéristiques de l'unité de moulage :
- l'amortisseur de torsion comporte au moins un organe élastique qui est interposé circonférentiellement entre le tronçon d'entrée de couple et le tronçon de sortie de couple ;
- chaque organe élastique est formé par un ressort hélicoïdal ;
- l'amortisseur de torsion est agencé axialement au niveau du suiveur de came ;
- une portion d'accouplement du tronçon de sortie de couple est insérée concentriquement dans un logement de réception du tronçon d'entrée de couple ;
- la portion d'accouplement du tronçon de sortie de couple est équipée de butées radiales en saillie extérieure qui sont interposées circonférentiellement entre des butées radiales en saillie intérieure du logement de réception du tronçon d'entrée de couple, les organes élastiques étant montés précontraints entre deux butées adjacentes ;
- la raideur des organes élastiques de l'amortisseur de torsion est déterminée en fonction de la fréquence propre en torsion des tronçons de l'ensemble à arbre de commande autour de leur axe, de manière à amortir les oscillations en torsion de l'ensemble à arbre de commande lorsque le suiveur de came accoste le chemin de came associé pendant le fonctionnement de l'unité de moulage ;
- l'amortisseur de torsion permet d'amortir le choc d'accostage uniquement dans le sens de pivotement commandant l'ouverture des supports de moule.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 représente schématiquement une station de formage vue de dessus comportant une came de commande de l'ouverture des supports de moule ;
- la figure 2 est une vue en perspective qui représente une unité de moulage comportant un dispositif de commande de l'ouverture réalisé selon les enseignements de l'invention ;
- la figure 3 est une vue de dessus qui représente trois unités de moulage dont les supports de moule occupent, de droite à gauche, une position fermée, une position fermée immédiatement avant l'ouverture, et une position ouverte ;
- la figure 4 est une vue schématique en coupe axiale qui représente l'arbre de commande équipé d'un amortisseur de torsion conformément aux enseignements de l'invention ;
- la figure 5 est une vue en coupe transversale selon le plan de coupe 5-5 de la figure 4 qui représente l'amortisseur de torsion ;
- la figure 6 est un diagramme qui représente une première courbe en trait continu qui montre le couple exercé sur l'arbre lors de l'accostage du suiveur de came sur la came pour un dispositif de commande muni d'un amortisseur de torsion, et une deuxième courbe en traits pointillés qui montre le couple exercé sur la manivelle lors de l'accostage du suiveur de came sur la came pour un dispositif de commande dénué d'amortisseur de torsion ;
- la figure 7 est un schéma qui illustre une modélisation de l'ensemble à arbre de commande par des ressorts de torsion.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif des orientations longitudinale, verticale et transversale indiquées par le trièdre "L,V,T" des figures et associées à une unité de moulage. La direction longitudinale est orientée dans le sens de déplacement d'une unité 12 de moulage tandis que la direction transversale est orientée radialement vers le centre du carrousel portant l'unité 12 de moulage.

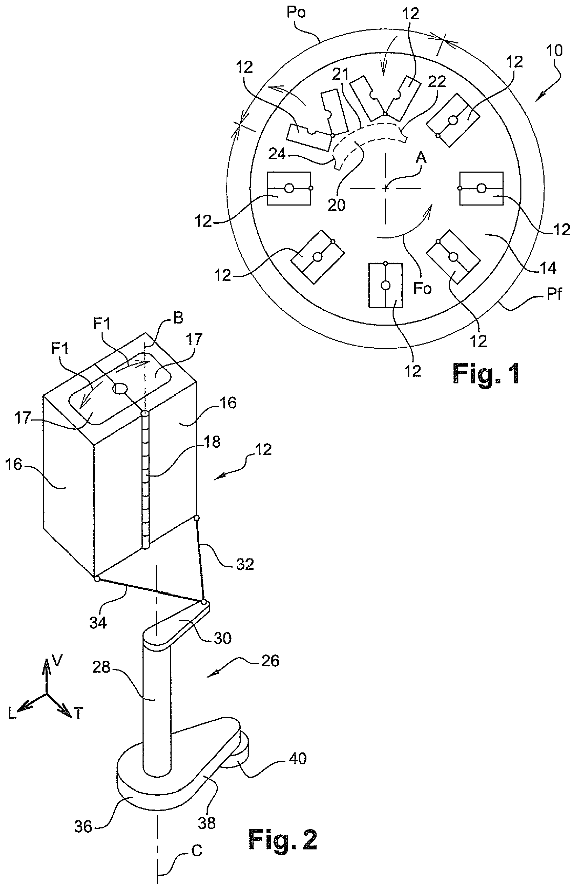

On a représenté à la figure 1 une station 10 de formage appartenant à une installation (non représentée) de production en ligne et en continu de récipients à partir de préformes en matériau thermoplastique. L'opération consistant à transformer la préforme en récipient final est appelée par la suite "opération de formage".

La station 10 de formage comporte plusieurs unités 12 de moulage qui sont mobiles le long d'un trajet commun de production. Chaque unité 12 de moulage est destinée à recevoir une préforme dont le corps est suffisamment chaud pour être formé, par exemple par soufflage ou par étirage-soufflage. Les unités 12 de moulage sont ici mobiles en continu.

Dans l'exemple représenté à la figure 1, les unités 12 de moulage sont montées avec un pas régulier à la périphérie d'un carrousel 14 qui tourne, ici de manière continue et dans un sens antihoraire indiqué par la flèche "F0", autour d'un axe "A" central vertical. Le trajet de production est ainsi circulaire et centré sur l'axe "A".

Comme représenté à la figure 2, chaque unité 12 de moulage comporte au moins deux supports 16 de moule. Chaque support 16 de moule est destiné à recevoir un demi-moule 17 comportant une demi-empreinte, soit du corps à l'exception du fond du récipient final à obtenir après l'opération de formage, soit de la totalité du récipient. Les supports 16 de moule de chaque unité 12 de moulage sont destinés à être commandés entre une position ouverte dans laquelle les demi-moules 17 sont écartés l'un de l'autre transversalement et une position fermée dans laquelle les demi-moules 17 sont joints pour reconstituer l'empreinte. La figure 2 illustre des supports 16 de moule en position fermée.

En position ouverte, un récipient fini peut être sorti de l'unité 12 de moulage, et une nouvelle préforme chaude peut être positionnée entre les deux demi-moules 17. En position fermée, la préforme reçue dans l'empreinte peut être conformée en récipient final lors de l'opération de formage.

Comme représenté à la figure 1, le trajet de production des unités 12 de moulage est divisé en deux parties. Sur une première partie "Po" d'ouverture, les supports 16 de moule sont commandés en position ouverte, tandis que sur la partie "Pf" de fermeture, constituant ici le reste du trajet, les supports 16 de moule occupent leur position fermée. La première partie d'ouverture s'étend depuis un point amont situé dans une zone de sortie des récipients finis, jusqu'à un point aval situé dans une zone d'insertion d'une nouvelle préforme chaude.

Les deux supports 16 de moule sont ici articulés l'un par rapport à l'autre par l'intermédiaire d'une charnière 18 d'axe "B" vertical montée du côté dirigé vers l'axe "A". Les supports 16 de moule sont portés par le carrousel 14 par l'intermédiaire de leur axe "B" de charnière qui est ainsi fixe par rapport au carrousel 14. Lors de leur ouverture, les deux supports 16 de moule pivotent dans un sens opposé autour de l'axe "B" de charnière, comme indiqué par des flèches "F1" de la figure 2. La fermeture des supports 16 de moule est effectuée par leur pivotement respectif en sens inverse.

Bien entendu l'invention est applicable à d'autres cinématiques de supports de moule dans lesquelles les mouvements d'ouverture et de fermeture sont commandés par une came.

De manière bien connue, chaque unité 12 de moulage comporte aussi des moyens (non représentés) de mise sous pression de la préforme pour permettre son formage, tel qu'une tuyère de soufflage.

Les supports 16 de moule d'une unité de moulage sont rappelés automatiquement, par exemple élastiquement, vers leur position fermée.

Les supports 16 de moule sont commandés vers leur position ouverte par un dispositif de commande à came associé à un ensemble 26 à arbre. Ce dispositif comporte ainsi une came 20 qui est fixe par rapport aux zones de sortie et d'insertion. La came 20 est plus particulièrement agencée verticalement sous l'espace balayé par le passage des supports 16 de moule et l'ensemble 26 à arbre.

La came 20 est commune à toutes les unités 12 de moulage. Cette came 20 comporte un chemin 21 de came qui s'étend sur un secteur angulaire autour de l'axe "A" qui correspond à la partie "Po" d'ouverture du trajet de production. Le chemin de came comporte s'étend ainsi depuis une zone 22 d'accostage amont qui est agencé à l'extrémité amont de la partie "Po" d'ouverture jusqu'à une zone 24 de décollage qui est agencé à l'extrémité aval de la partie "Po" d'ouverture.

Le dispositif de commande à came comporte aussi l'ensemble 26 à arbre de commande des supports 16 de moule vers au moins l'une de leurs positions, ici vers leur position ouverte. Cet ensemble 26 à arbre s'étend verticalement le long d'un axe "C" pour permettre de transmettre un mouvement de commande depuis la came 20 jusqu'aux supports 16 de moule. Chaque unité 12 de moulage comporte individuellement un ensemble 26 à arbre de commande respectif. Chaque ensemble 26 à arbre de commande est ainsi embarqué sur le carrousel 14 avec l'unité 12 de moulage associée.

L'ensemble 26 à arbre de commande est monté pivotant autour de l'axe "C" susmentionné, qui est vertical dans l'exemple illustré. L'axe "C" est décalé longitudinalement dans un sens ou dans l'autre par rapport à l'axe "B" de charnière.

De manière générale, la partie supérieure de l'ensemble 26 à arbre comporte un tronçon 28 supérieur de sortie de couple qui est monté pivotant axialement autour dudit axe "C" par rapport au carrousel 14. Ce tronçon 26 supérieur de sortie de couple constitue l'arbre à proprement parler. Le tronçon 28 de sortie de couple est lié mécaniquement à au moins un support 16 de moule de manière à transmettre un mouvement de pivotement au moins dans un sens d'ouverture de l'ensemble 26 à arbre de commande pour commander l'ouverture des supports 16 de moule.

En variante non représentée de l'invention, le tronçon de sortie de couple permet aussi de transmettre un mouvement de pivotement au moins dans un sens de fermeture de l'ensemble à arbre de commande pour commander la fermeture des supports 16 de moule.

Le tronçon 28 de sortie est ici lié mécaniquement à chaque support 16 de moule par l'intermédiaire d'un bras 30 supérieur qui s'étend longitudinalement depuis l'axe "C" de l'ensemble 26 à arbre de manière qu'au moins un tronçon du bras 30 soit agencé transversalement en vis-à-vis de l'axe "B" de charnière. Le bras 30 est relié de manière rigide avec le tronçon 28 de sortie de couple.

Une première bielle 32 comporte une première extrémité qui est montée pivotante autour d'un axe vertical sur le bras 30, de manière excentrée par rapport à l'axe "C", et elle comporte une deuxième extrémité qui est montée pivotante autour d'un axe vertical sur un des supports 16 de moule, de manière excentrée par rapport à l'axe "B" de charnière.

Une deuxième bielle 34 comporte une première extrémité qui est montée pivotante autour d'un axe vertical sur le bras 30, de manière excentrée par rapport à l'axe "C", et elle comporte une deuxième extrémité qui est montée pivotante autour d'un axe vertical sur l'autre des supports 16 de moule, de manière excentrée par rapport à l'axe "B" de charnière.

Les deux bielles 32, 34 sont ici montées sur le bras 30 autour d'un axe vertical commun qui est agencé sensiblement transversalement en vis-à-vis de l'axe "B" de charnière.

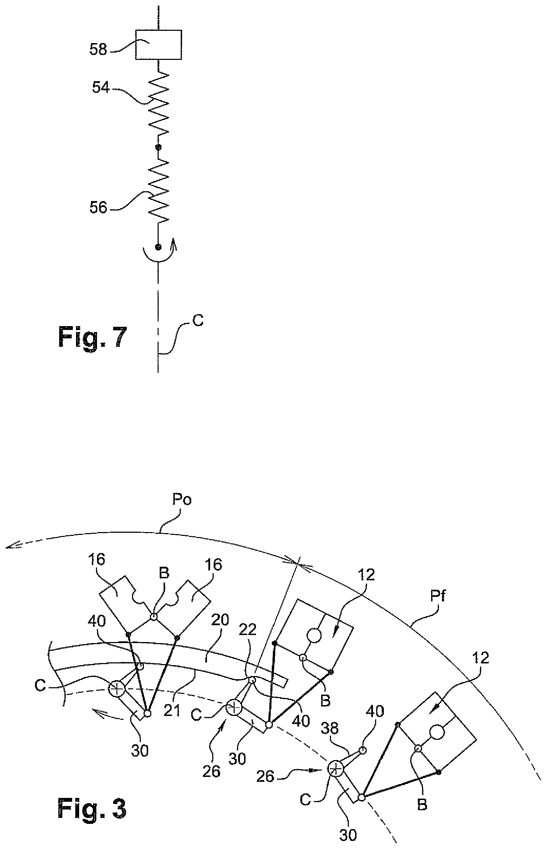

Ainsi, lors du pivotement du tronçon 28 de sortie de couple dans un sens d'ouverture, ici dans un sens horaire en se référant à la figure 3, le bras 30 tire sur les bielles 32, 34, entraînant ainsi l'ouverture des supports 16 de moule comme indiqué à gauche de la figure 3.

De manière générale, la partie inférieure de l'ensemble 26 à arbre de commande comporte aussi un tronçon 36 inférieur d'entrée de couple qui est monté pivotant autour de l'axe "C" par rapport au carrousel 14, coaxialement avec le tronçon 28 de sortie de couple. Le tronçon 36 d'entrée de couple comporte une manivelle 38 inférieure de commande en pivotement de l'ensemble 26 à arbre qui s'étend radialement par rapport à l'axe "C". La manivelle 38 de commande est reliée de manière rigide avec le tronçon 36 d'entrée de couple.

La manivelle 38 porte un suiveur 40 de came qui est excentré radialement par rapport à l'axe "C" et qui est agencé verticalement au niveau du chemin 21 de came. La manivelle 38 est ainsi décalée verticalement, ici vers le bas, par rapport au bras 30. De ce fait, le couple de pivotement qui permet de commander l'ouverture des supports 16 de moule est transmis depuis la manivelle 38 jusqu'au bras 30 par pivotement des différents éléments composant l'ensemble 26 à arbre de commande autour de l'axe "C".

Le suiveur 40 de came est ici formé par un galet qui est monté tournant autour d'un axe vertical. Le chemin 21 de came est conformé de manière que le suiveur 40 de came soit en contact avec la came 20 sur la totalité de la partie "Po" d'ouverture du trajet, c'est-à-dire entre la zone 22 d'accostage et la zone 24 de décollage selon le sens de déplacement de l'unité 12 de moulage. Après la zone 24 de décollage, et au cours du déplacement de l'unité 12 de moulage le long de la partie de "Pf" fermeture du trajet, le suiveur 40 de came est destiné à n'être en contact avec aucune came.

Le tronçon 28 de sortie de couple et le tronçon 36 d'entrée de couple forment deux éléments distincts appartenant à l'ensemble 26 à arbre de commande. Le tronçon 36 d'entrée de couple est pivotant coaxialement par rapport au tronçon 28 de sortie de couple. Le tronçon 36 d'entrée de couple est accouplé avec le tronçon 28 de sortie de couple par l'intermédiaire d'au moins un amortisseur 42 de torsion.

Cet agencement permet d'introduire une plus grande souplesse en torsion dans l'ensemble 26 à arbre de commande. Ceci permet notamment d'atténuer l'intensité maximale du choc d'accostage lorsque le suiveur 40 de came entre en contact avec le chemin 21 de came à grande vitesse. Une partie de l'énergie du choc d'accostage est en effet accumulée élastiquement dans l'amortisseur 42 de torsion avant d'être libéré de manière étalée dans le temps.

En outre, comme cela sera expliqué ultérieurement, un dimensionnement adapté de la raideur "K2" de l'amortisseur 42 de torsion permet de réduire, voire d'éliminer, les vibrations en torsion provoquées de l'ensemble 26 à arbre de commande provoquées par le choc d'accostage.

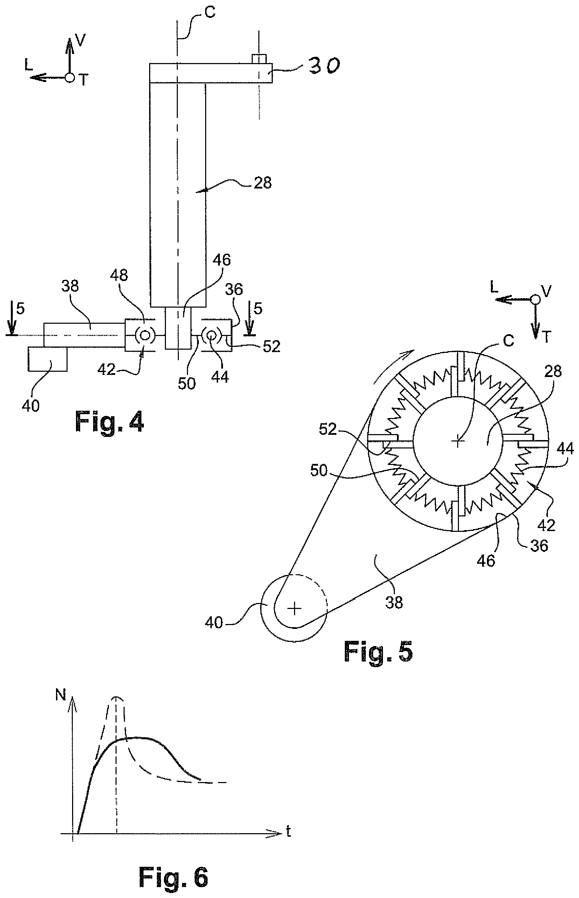

Dans le mode de réalisation représenté aux figures 4 et 5, l'amortisseur 42 de torsion comporte des organes 44 élastiques qui sont interposés circonférentiellement entre le tronçon 36 d'entrée de couple et le tronçon 28 de sortie de couple. Il s'agit ici de ressorts hélicoïdaux dont l'axe est agencé circonférentiellement et qui travaillent en compression.

L'amortisseur 42 de torsion est ici agencé axialement au niveau de la manivelle 38. De ce fait, le tronçon 36 d'entrée de couple présente une longueur axiale très courte, tandis que le tronçon 28 de sortie de couple s'étend sur toute la longueur de l'ensemble 26 à arbre de commande. Le tronçon 28 de sortie de couple présente ici une forme cylindrique de révolution autour de l'axe "C".

Une portion 46 d'accouplement située à l'extrémité inférieure du tronçon 28 de sortie de couple est insérée concentriquement dans un logement 48 central de réception du tronçon 36 d'entrée de couple. Un espace radial est réservé entre le tronçon 28 de sortie de couple et le tronçon 36 d'entrée de couple pour recevoir l'amortisseur 42 de torsion.

La portion 46 d'accouplement est équipée d'ailes rayonnantes en saillie extérieure formant des butées 50 radiales réparties régulièrement autour de l'axe "C". Le logement 48 de réception du tronçon 36 d'entrée de couple comporte des ailes en saillie radiale vers l'intérieur formant des butées 52 radiales réparties régulièrement autour de l'axe "C". Les butées 52 radiales du logement 48 de réception sont en nombre égal à celui des butées 50 radiales de la portion 46 d'accouplement. Chaque butée 50 radiale de la portion d'accouplement est interposée circonférentiellement entre deux butées 52 radiales successives du logement 48 de réception.

Cet agencement permet un pivotement relatif du tronçon 36 d'entrée de couple par rapport au tronçon 28 de sortie de couple dont le débattement est déterminé par l'écart circonférentiel réservé entre leurs butées 50, 52 respectives adjacentes. Les organes 44 élastiques sont montés en compression entre deux butées 50, 52 adjacentes appartenant respectivement au tronçon 36 d'entrée de couple et au tronçon 28 de sortie de couple.

Les organes 44 élastiques sont plus particulièrement agencés de manière à s'opposer au pivotement du tronçon 36 d'entrée de couple dans le sens d'ouverture. Ils sont montés précontraints de manière que le tronçon 36 d'entrée de couple soit pivoté dans un sens antihoraire par rapport au tronçon 28 de sortie de couple jusqu'à ce que les butées 50 radiales du tronçon 28 de sortie de couple soient en contact circonférentiel avec les butée 52 radiales du tronçon 36 d'entrée de couple. Ainsi, les organes 44 élastiques ne commencent à emmagasiner de l'énergie que lorsque le couple transmis dépasse un seuil déterminé, par exemple 250000 N.mm.

De ce fait, l'amortisseur 42 de torsion permet d'amortir le choc uniquement dans le sens de pivotement commandant l'ouverture des supports 16 de moule.

Par ailleurs, pour permettre d'amortir, voire d'éliminer, les vibrations en torsion consécutives à l'excitation provoquée par les chocs d'accostage, la raideur "K2" en torsion de l'amortisseur 42 de torsion est déterminée en fonction de la fréquence "f0" propre en torsion des différents tronçons 28, 36 de l'ensemble à arbre de commande autour de leur axe "C".

Dans l'exemple représenté aux figures, le tronçon 36 d'entrée de couple est très court et présente de ce fait une rigidité en torsion très supérieure à celle du tronçon 28 de sortie de couple. Le calcul de la raideur de l'amortisseur de torsion implique de calculer la souplesse de chaque tronçon. De manière connue, la souplesse est égale à l'inverse de la raideur. Du fait de sa très grande rigidité, la souplesse du tronçon 36 d'entrée de couple sera suffisamment faible pour être négligeable.

Comme illustré à la figure 7, pour les besoins du calcul de la raideur "K2" de l'amortisseur 42 de torsion, l'ensemble 26 à arbre de commande sera modélisé par un premier ressort 54 de torsion présentant la même raideur "K1" que le tronçon 28 de sortie de couple. Ce premier ressort 54 de torsion sera agencé en série avec un deuxième ressort 56 de torsion coaxial présentant la même raideur "K2" que l'amortisseur 42 de torsion. Une masse 58 présentant la même inertie "J" angulaire que les supports 16 de moule autour de l'axe "C" de pivotement des ressorts 54, 56 de torsion sera agencée à l'extrémité libre du ressort 54 de torsion symbolisant le tronçon 28 de sortie de couple, tandis qu'un couple similaire à celui exercé par le suiveur 40 de came sera appliqué à l'extrémité libre du ressort 56 symbolisant l'amortisseur 42 de torsion.

La fréquence "f0" propre, à l'origine très élevée, est ici diminuée par l'interposition de l'amortisseur 42 de torsion de manière à minimiser les vibrations en torsion de l'extrémité libre du deuxième ressort 56 de torsion. Un tel dimensionnement de la raideur "K2" de l'amortisseur 42 de torsion est bien connu de l'homme du métier et il ne sera pas décrit ici plus en détail. La raideur "K2" en torsion de l'amortisseur 42 de torsion est par exemple égale à une fraction de la raideur "K1" en torsion du tronçon 28 de sortie de couple, par exemple de l'ordre de 1/5.

Ce dimensionnement de la raideur "K2" de l'amortisseur 42 de torsion a pour but de maintenir constamment le suiveur 40 de came au contact avec le chemin 21 de came après la zone 22 d'accostage.

On explique à présent le fonctionnement de l'unité 12 de moulage en référence à la figure 3.

Lorsque l'unité 12 de moulage parcourt la partie "Pf" de fermeture du trajet, comme illustré par l'unité 12 de moulage située à droite de la figure 3, le suiveur 40 de came n'est en contact avec aucun chemin de came. De ce fait, les supports 16 de moule sont rappelés élastiquement dans leur position fermée. Dans cette configuration, les organes 44 élastiques contraignent les butées 52 radiales du tronçon 36 d'entrée de couple dans un sens horaire contre les butées 50 radiales du tronçon 28 de sortie de couple.

Lorsque l'unité 12 de moulage arrive à l'extrémité amont de la partie "Po" d'ouverture du trajet, comme illustré par l'unité 12 de moulage située au milieu de la figure 3, le suiveur 40 de came accoste le chemin 21 de la came 20 à une vitesse élevée, par exemple supérieure à 6 m/s. Bien que le chemin 21 de came soit incurvé pour atténuer le choc d'accostage, ce dernier demeure suffisamment intense pour que le couple d'ouverture produit par la manivelle 38 soit supérieur au seuil de précontrainte des organes 44 élastiques de l'amortisseur 42 de torsion. De ce fait, le tronçon 36 d'entrée de couple pivote, dans un sens antihoraire, légèrement plus vite que le tronçon 28 de sortie de couple en comprimant les organes 44 élastiques.

Cette compression des organes 44 élastiques permet de diminuer l'intensité du choc d'accostage comme cela est représenté en trait continu au diagramme de la figure 6, ce même diagramme représentant en traits pointillés l'intensité du choc d'accostage pour un arbre monobloc sans amortisseur de torsion.

L'énergie produite par le choc est emmagasinée par les organes 44 élastiques puis restituée progressivement, mais néanmoins assez rapidement, pour permettre le pivotement complet du tronçon 28 de sortie de couple jusqu'à la position d'ouverture des supports 16 de moule.

En outre, la souplesse de l'amortisseur 42 de torsion est telle que, les vibrations en torsion dans l'ensemble 26 à arbre de commande, lorsque l'unité 12 de moulage se déplace le long de la came 20, comme illustré à gauche de la figure 3, le suiveur 40 de came demeure sensiblement en permanence en contact avec le chemin 21 de came.

En variante non représentée de l'invention, et par inversion mécanique, l'amortisseur de torsion est agencé axialement au niveau du bras supérieur. En ce cas, le tronçon de sortie de couple présente une dimension verticale très réduite, tandis que le tronçon d'entrée de couple présente une forme d'axe allongé verticalement depuis la manivelle jusqu'au bras supérieur. Une portion d'extrémité supérieure du tronçon d'entrée est alors reçue dans un logement central du tronçon de sortie de couple. Pour le dimensionnement de la raideur de l'amortisseur de torsion, seule la raideur en torsion du tronçon d'entrée de couple est prise en compte, tandis que la souplesse du tronçon de sortie de couple est considérée comme négligeable.

Selon encore une variante non représentée, l'amortisseur de torsion est agencé verticalement entre le bras et la manivelle. Dans ce cas, les deux tronçons d'entrée et de sortie présentent une forme allongée verticalement, et leurs raideurs respectives sont retenues pour dimensionner la raideur de l'amortisseur de torsion.

Selon encore une autre variante, l'ensemble à arbre de commande comporte deux amortisseurs de torsion qui sont décalés verticalement l'un par rapport à l'autre. Un tronçon intermédiaire est alors agencé verticalement entre le tronçon d'entrée de couple et le tronçon de sortie de couple.

L'agencement selon l'invention permet ainsi d'obtenir une réponse rapide et précise de l'ouverture des supports 16 de moule ainsi que d'éviter une usure prématuré du suiveur 40 de came notamment en limitant d'intensité du choc d'accostage et en évitant le tressautement du suiveur 40 de came sur le chemin 21 de came.

## Revendications

1. Unité (12) de moulage, notamment pour le formage de récipient en matériau thermoplastique, qui est montée mobile le long d'un trajet de production et qui comporte au moins deux supports (16) de moule destinés à être commandés entre une position ouverte et une position fermée, l'unité (12) de moulage étant équipé d'un ensemble (26) à arbre de commande des supports (16) de moule vers au moins l'une de leurs positions, l'ensemble (26) étant monté pivotant autour d'un axe (C) et comportant :
- un tronçon (28) de sortie de couple qui est lié mécaniquement à au moins un support (16) de moule pour transmettre le mouvement de pivotement ;
- un tronçon (36) d'entrée de couple qui comporte un suiveur (40) de came excentré, le suiveur (40) de came étant destiné à coopérer avec un chemin (21) de came ;
**caractérisée en ce que** le tronçon (28) de sortie de couple et le tronçon (36) d'entrée de couple forment deux éléments distincts de l'ensemble (26) à arbre de commande pivotant coaxialement l'un par rapport à l'autre, ledit tronçon (36) d'entrée de couple étant accouplé avec le tronçon (28) de sortie de couple par l'intermédiaire d'au moins un amortisseur (42) de torsion.

2. Unité (12) de moulage selon la revendication 1, **caractérisée en ce que** l'amortisseur (42) de torsion comporte au moins un organe (44) élastique qui est interposé circonférentiellement entre le tronçon (36) d'entrée de couple et le tronçon (28) de sortie de couple.

3. Unité (12) de moulage selon la revendication 2, **caractérisée en ce que** chaque organe (44) élastique est formé par un ressort hélicoïdal.

4. Unité (12) de moulage selon l'une quelconque des revendications 1 à 3, **caractérisée en ce que** l'amortisseur (42) de torsion est agencé axialement sensiblement au niveau du suiveur (40) de came.

5. Unité (12) de moulage selon l'une quelconque des revendications 1 à 4, **caractérisée en ce qu'**une portion (46) d'accouplement du tronçon (28) de sortie de couple est insérée concentriquement dans un logement (48) de réception du tronçon (36) d'entrée de couple.

6. Unité (12) de moulage selon la revendication 5, **caractérisée en ce que** la portion (46) d'accouplement du tronçon (28) de sortie de couple est équipée de butées (50) radiales en saillie extérieure qui sont interposées circonférentiellement entre des butées (52) radiales en saillie intérieure du logement (48) de réception du tronçon (36) d'entrée de couple, les organes (44) élastiques étant montés précontraints entre deux butées (50, 52) adjacentes.

7. Unité (12) de moulage selon l'une quelconque des revendications 1 à 6, **caractérisée en ce que** la raideur des organes (44) élastiques de l'amortisseur (42) de torsion est déterminée en fonction de la fréquence (f0) propre en torsion des tronçons (28, 36) de l'ensemble (26) à arbre de commande autour de leur axe (C), de manière à amortir les oscillations en torsion de l'ensemble (26) à arbre de commande lorsque le suiveur (40) de came accoste le chemin (21) de came associé pendant le fonctionnement de l'unité (12) de moulage.

8. Unité (12) de moulage selon l'une quelconque des revendications 1 à 7, **caractérisée en ce que** l'amortisseur (42) de torsion est agencé pour amortir le choc d'accostage uniquement dans le sens de pivotement commandant l'ouverture des supports (16) de moule.

## Patentansprüche

1. Formgebungsanlage (12), insbesondere zum Umformen eines Behälters aus thermoplastischem Material, die beweglich entlang einer Produktionsstrecke montiert ist und die mindestens zwei Formwerkzeugträger (16) aufweist, die dazu bestimmt sind, zwischen einer offenen Stellung und einer geschlossenen Stellung gesteuert zu werden, wobei die Formgebungsanlage (12) mit einer Baueinheit (26) mit einer Antriebswelle der Formwerkzeugträger (16) in mindestens eine ihrer Stellungen ausgestattet ist, wobei die Baueinheit (26) um eine Achse (C) schwenkbar montiert ist und aufweist:
- einen Drehmoment-Ausgangsabschnitt (28), der mechanisch mit mindestens einem Formwerkzeugträger (16) verbunden ist, um die Schwenkbewegung zu übertragen;
- einen Drehmoment-Eingangsabschnitt (36), der einen außermittigen Nockenfolger (40) aufweist, wobei der Nockenfolger (40) dazu bestimmt ist, mit einer Nockenbahn (21) zusammenzuwirken;
**dadurch gekennzeichnet, dass** der Drehmoment-Ausgangsabschnitt (28) und der Drehmoment-Eingangsabschnitt (36) zwei unterschiedliche Elemente der Baueinheit (26) mit Antriebswelle sind, die koaxial zueinander schwenken, wobei der Drehmoment-Eingangsabschnitt (36) mittels mindestens eines Torsionsdämpfers (42) mit dem Drehmoment-Ausgangsabschnitt (28) gekoppelt ist.

2. Formgebungsanlage (12) nach Anspruch 1, **dadurch gekennzeichnet, dass** der Torsionsdämpfer (42) mindestens ein elastisches Organ (44) aufweist, das am Umfang zwischen den Drehmoment-Eingangsabschnitt (36) und den Drehmoment-Ausgangsabschnitt (28) eingefügt ist.

3. Formgebungsanlage (12) nach Anspruch 2, **dadurch gekennzeichnet, dass** jedes elastische Organ (44) von einer Schraubenfeder gebildet wird.

4. Formgebungsanlage (12) nach einem der Ansprüche 1 bis 3, **dadurch gekennzeichnet, dass** der Torsionsdämpfer (42) axial im Wesentlichen im Bereich des Nockenfolgers (40) angeordnet ist.

5. Formgebungsanlage (12) nach einem der Ansprüche 1 bis 4, **dadurch gekennzeichnet, dass** ein Kopplungsteil (46) des Drehmoment-Ausgangsabschnitts (28) konzentrisch in einen Aufnahmesitz (48) des Drehmoment-Eingangsabschnitts (36) eingefügt ist.

6. Formgebungsanlage (12) nach Anspruch 5, **dadurch gekennzeichnet, dass** der Kopplungsteil (46) des Drehmoment-Ausgangsabschnitts (28) mit nach außen vorstehenden radialen Anschlägen (50) ausgestattet ist, die am Umfang zwischen nach innen vorstehende radiale Anschläge (52) des Aufnahmesitzes (48) des Drehmoment-Eingangsabschnitts (36) eingefügt sind, wobei die elastischen Organe (44) zwischen zwei benachbarten Anschlägen (50, 52) vorgespannt montiert sind.

7. Formgebungsanlage (12) nach einem der Ansprüche 1 bis 6, **dadurch gekennzeichnet, dass** die Steifheit der elastischen Organe (44) des Torsionsdämpfers (42) abhängig von der Eigentorsionsfrequenz (f0) der Abschnitte (28, 36) der Baueinheit (26) mit Antriebswelle um ihre Achse (C) bestimmt wird, um die Torsionsschwingungen der Baueinheit (26) mit Antriebswelle zu dämpfen, wenn der Nockenfolger (40) während des Betriebs der Formgebungsanlage (12) an die zugeordnete Nockenbahn (21) anlegt.

8. Formgebungsanlage (12) nach einem der Ansprüche 1 bis 7, **dadurch gekennzeichnet, dass** der Torsionsdämpfer (42) eingerichtet ist, um den Anlegestoß nur in der Schwenkrichtung zu dämpfen, die die Öffnung der Formwerkzeugträger (16) steuert.

## Claims

1. Moulding unit (12), in particular for forming containers made of thermoplastic material, which is mounted so as to be able to move along a production path and which comprises at least two mould supports (16) that are designed to be made to switch between an open position and a closed position, the moulding unit (12) being equipped with an assembly (26) having a control shaft for urging the mould supports (16) to at least one of their positions, the assembly (26) being mounted so as to be able to pivot about an axis (C) and comprising:
- a torque output segment (28) which is mechanically linked to at least one mould support (16) in order to transmit the pivoting movement;
- a torque input segment (36) which comprises an eccentric cam follower (40), the cam follower (40) being designed to cooperate with a cam race (21);
**characterized in that** the torque output segment (28) and the torque input segment (36) form two distinct elements of the control shaft assembly (26) pivoting coaxially with respect to one another, said torque input segment (36) being coupled to the torque output segment (28) via the intermediary of at least one torsion damper (42).

2. Moulding unit (12) according to Claim 1, **characterized in that** the torsion damper (42) comprises at least one elastic member (44) which is interposed circumferentially between the torque input segment (36) and the torque output segment (28).

3. Moulding unit (12) according to Claim 2, **characterized in that** each elastic member (44) consists of a coil spring.

4. Moulding unit (12) according to any one of Claims 1 to 3, **characterized in that** the torsion damper (42) is arranged axially essentially at the level of the cam follower (40).

5. Moulding unit (12) according to any one of Claims 1 to 4, **characterized in that** a coupling portion (46) of the torque output segment (28) is inserted concentrically into a receiving recess (48) of the torque input segment (36).

6. Moulding unit (12) according to Claim 5, **characterized in that** the coupling portion (46) of the torque output segment (28) is equipped with externally projecting radial stops (50) which are interposed circumferentially between internally projecting radial stops (52) of the receiving recess (48) of the torque input segment (36), the elastic members (44) being mounted in a preloaded state between two adjacent stops (50, 52).

7. Moulding unit (12) according to any one of Claims 1 to 6, **characterized in that** the stiffness of the elastic members (44) of the torsion damper (42) is determined in dependence on the natural frequency (f0) in torsion of the segments (28, 36) of the control shaft assembly (26) about their axis (C), so as to damp the torsional oscillations of the control shaft assembly (26) when the cam follower (40) contacts the associated cam race (21) during operation of the moulding unit (12).

8. Moulding unit (12) according to any one of Claims 1 to 7, **characterized in that** the torsion damper (42) is arranged to damp the contacting impact only in the direction of pivoting that brings about opening of the mould supports (16).
